# FASCICULE DE BREVET EUROPEEN

(11) **EP 0 517 561 B1**
(45) Date de publication et mention de la délivrance du brevet: **26.10.1994**
(21) Numéro de dépôt: 92401388.1
(22) Date de dépôt: 21.05.1992
(51) Int. Cl.: B60J 1/14

(54) **Dispositif de liaison d'un panneau pivotant à une rotule prévue à l'extrémité d'un élément de commande**
Vorrichtung zum Verbinden einer schwenkbaren Platte an ein am äussersten Ende eines Steuerelementes montiertes Gelenk
Device for connecting a turnable panel to a ball joint mounted at the end of a control element

(30) Priorité: 04.06.1991 FR 9106901
(43) Date de publication de la demande: 09.12.1992
(73) Titulaire: AUTOMOBILES PEUGEOT, 75116 Paris (FR); AUTOMOBILES CITROEN, 92200 Neuilly-sur-Seine (FR)
(72) Inventeur: Simond, Roland, F-78280 Guyancourt (FR)
(74) Mandataire: Boivin, Claude

(56) Documents cités:
- US-A- 4 186 524
- US-A- 4 918 865

## Description

L'invention concerne la liaison d'un panneau pivotant, par exemple d'une fenêtre de véhicule pivotante, à son élément de commande.

Il est connu de prévoir à l'extrémité de l'élément de commande une rotule logée dans un palier composé de plusieurs pièces placées de part et d'autre du panneau pivotant et assemblées entre elles par des vis et/ou des rivets. Ces dispositifs de liaison sont difficilement utilisables à l'aide d'un robot et sont relativement coûteux; de plus, ils n'assurent pas une grande sécurité contre l'ouverture du panneau par effraction.

La présente invention a pour objet un dispositif de liaison qui remédie à ces inconvénients.

C'est ainsi que le document US-A-4,186,524 décrit un dispositif de liaison d'un panneau pivotant à une rotule prévue à l'extrémité d'un élément de commande, dispositif qui comprend une embase pouvant être enfilée dans un trou du panneau et y être fixée depuis l'extérieur, et un chapeau pouvant être fixé sur l'embase, un logement pour la rotule de l'élément de commande étant prévu dans l'embase ou dans le chapeau.

Ce dispositif est caractérisé en ce que l'embase comporte des languettes élastiques permettant à l'embase de s'encliqueter dans le trou et en ce que le chapeau présente des pinces découpées terminées chacune par un crochet pouvant venir s'engager sur un épaulement de l'embase et peut s'engager par sa partie supérieure dans un alésage de la partie de l'embase dans laquelle sont formées les languettes, de sorte qu'il empêche tout resserrement de ces languettes, donc le retrait de l'embase du panneau.

Divers modes de réalisation de l'invention sont indiqués dans les revendications dépendantes 2 à 6.

On a décrit ci-après, à titre d'exemple non limitatif, un mode de réalisation du dispositif de liaison selon l'invention, avec référence aux dessins annexés dans lesquels :
La Figure 1 montre un exemple d'utilisation du dispositif;
La Figure 2 est une vue en coupe du dispositif;
La Figure 3 en est une vue en élévation;
La Figure 4 est une vue en coupe du dispositif monté sur une vitre de custode;
La Figure 5 est une vue en élévation du dispositif monté.

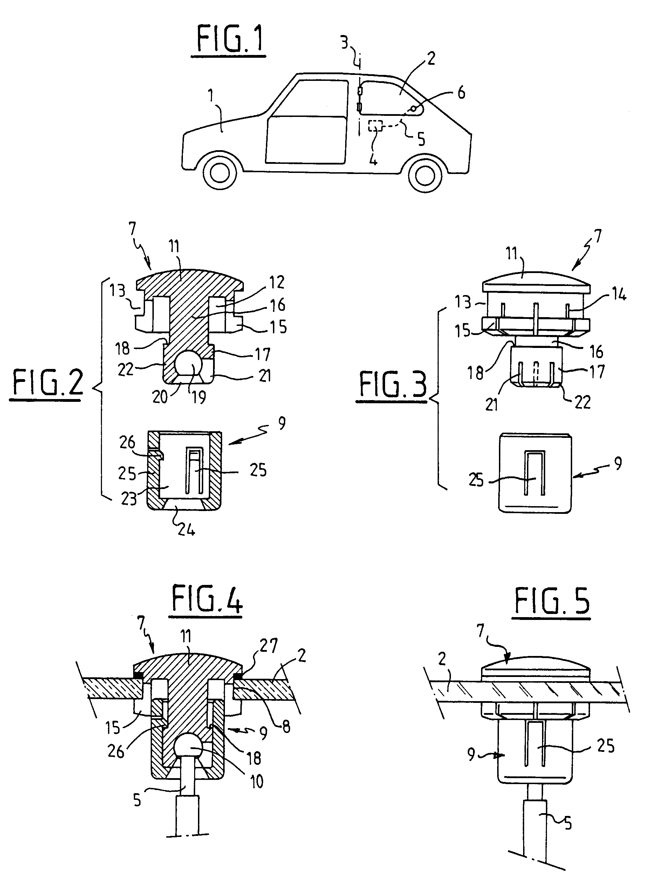

A la Figure 1, on voit un véhicule automobile 1 comportant une vitre de custode 2 articulée autour d'un axe 3 par rapport à la structure du véhicule. Cette vitre est commandée par un dispositif 4 actionnant une biellette 5 fixée à la vitre par un dispositif désigné dans son ensemble par la référence 6.
Le dispositif 6 comprend une embase 7 pouvant s'encliqueter dans un trou 8 de la vitre 2 et un chapeau 9 pouvant s'encliqueter sur le corps 7 en y maintenant une rotule 10 terminant la biellette 5.

L'embase 7 est constituée essentiellement par un corps cylindrique 11 comportant un alésage borgne axial 12 et une gorge extérieure 13. La largeur de cette gorge est légèrement supérieure à l'épaisseur de la vitre 2 et d'un joint d'étanchéité 27; sa profondeur détermine une partie cylindrique dont le diamètre est légèrement inférieur à celui du trou 8.

Le corps cylindrique 11 présente une série d'entailles 14 qui s'étendent jusqu'à la face ouverte de l'alésage 12 et délimitent des languettes élastiques 15. Ces languettes permettent à l'embase 7 de s'encliqueter dans le trou 8.

Au centre de l'alésage borgne 12 émerge une partie cylindrique 16, elle-même prolongée par une partie cylindrique 17, d'un diamètre légèrement supérieur de façon à créer un épaulement 18. Dans cette partie cylindrique 17 est réalisée une cavité sphérique 19 débouchant à l'extérieur par un alésage tronconique 20. Par ailleurs, dans cette partie cylindrique 17 sont pratiquées trois entailles 21 débouchant dans la cavité sphérique 19 et l'alésage 20 en délimitant trois pinces élastiques 22.

Le chapeau 9 est cylindrique. Son alésage 23 a l'une des faces ouverte alors que son autre face débouche à l'extérieur par un alésage tronconique 24 permettant le passage de la rotule 10. Il présente à sa périphérie trois pinces 25 découpées sur trois de leurs côtés dans la paroi du chapeau et terminées par un crochet 26; ceux-ci peuvent venir s'engager sur l'épaulement 18 existant entre les parties 16 et 17 de l'embase.

Pour fixer la biellette 5 à la vitre 2, on place le joint 27 dans la gorge 13 de l'embase 7, puis on introduit les parties cylindriques 16-17 de cet embout dans le trou 8 de la vitre; les languettes 15 s'éclipsent pour laisser passer cette vitre et reprennent ensuite leur position initiale en immobilisant l'embase sur la vitre (voir Figure 4).

Dans un deuxième temps, on enfile le chapeau 9 sur la biellette 5 en introduisant l'extrémité de cette biellette dans l'alésage conique 2 ; la sphère 10 écarte les languettes 22 qui se referment ensuite en emprisonnant la sphère 10. Il ne reste plus qu'à glisser le chapeau 9 sur la partie cylindrique 17 de l'embout. Les pinces élastiques 25 s'écartent et viennent se refermer sur l'épaulement 18. Le chapeau 9 verrouille ainsi la sphère 10 dans son logement. Par ailleurs, sa partie supérieure introduite dans l'alésage 12 de l'embase 7 empêche tout resserrement des pinces élastiques 15, dans le retrait de cette embase de la vitre 2 (voir Figure 5).

Il va de soi que la présente invention ne doit pas être considérée comme limitée au mode de réalisation décrit et représenté, mais en couvre, au contraire toutes les variantes. C'est ainsi, par exemple, que le logement 19 pour la rotule 10 pourraît être ménagé dans le chapeau 9.

## Revendications

1. Dispositif de liaison d'un panneau pivotant à une rotule prévue à l'extrémité d'un élément de commande, dispositif qui comprend une embase (7) pouvant être enfilée dans un trou (8) du panneau (2) et y être fixée depuis l'extérieur, et un chapeau (9) pouvant être fixé sur l'embase (7), un logement (19) pour la rotule (10) de l'élément de commande (5) étant prévu dans l'embase ou dans le chapeau,
caractérisé en ce que l'embase (7) comporte des languettes élastiques (15) permettant à l'embase de s'encliqueter dans le trou (8) et en ce que le chapeau (9) présente des pinces découpées (25) terminées chacune par un crochet (26) pouvant venir s'engager sur un épaulement (18) de l'embase (7) et peut s'engager par sa partie supérieure dans un alésage (12) de la partie de l'embase (7) dans laquelle sont formées les languettes (15), de sorte qu'il empêche tout resserrement de ces languettes, donc le retrait de l'embase (7) du panneau (2).

2. Dispositif de liaison selon la revendication 1,
caractérisé en ce que le logement (19) pour la rotule (10) est prévu dans l'embase (7) et en ce que le chapeau (9) verrouille la rotule (10) dans l'embase.

3. Dispositif selon la revendication 1 ou 2,
caractérisé en ce que l'embase (7) est constituée par un corps cylindrique (11) comportant une gorge extérieure (13) et pourvu d'entailles longitudinales (14) délimitant les languettes élastiques (15).

4. Dispositif selon l'une des revendications 2 à 3,
caractérisé en ce que l'embase (7) comporte une partie cylindrique (16-17) dans l'extrémité de laquelle est réalisé le logement (19) pour la rotule (10) et qui peut se loger dans le chapeau.

5. Dispositif selon la revendication 4,
caractérisé en ce que dans la partie cylindrique (17) sont pratiquées des entailles (21) débouchant dans le logement (19) et délimitant des pinces élastiques (22) pour le maintien de la rotule (10).

6. Dispositif selon la revendication 4 ou 5,
caractérisé en ce que le chapeau (9) est cylindrique et en ce que l'épaulement (18) est prévu dans la partie cylindrique (16-17) de l'embase (7).

## Claims

1. Device for linking a pivoting panel with a joint provided at the end of a control element, a device which includes a base (7) able to be slipped into a hole (8) of the panel (2) and able to be secured there from the outside, and a cap (9) able to be secured to the base (7), a housing (19) for the joint (10) of the control element (5) being provided in the base or in the cap,
wherein the base (7) comprises elastic tongues (15) enabling the base to be clipped into the hole (8) and wherein the cap (9) has cut clips (25) each ended by a hook (26) able to be engaged on a shoulder (18) of the base (7) and may be engaged via its upper portion in a bore (12) of the portion of the base (7) in which the tongues (15) are formed so that these tongues are prevented from crowding together and thus removal of the base (7) from the panel (2).

2. Linking device according to claim 1, wherein the housing (19) for the joint (10) is provided in the base (7) and wherein the cap (9) locks the joint (10) in the base.

3. Device according to claim 1 or 2,
wherein the base (7) is constituted by a cylindrical body (11) comprising an external throat (13) and provided with longitudinal notches (14) delimiting the elastic tongues (15).

4. Device according to claim 2 or 3, wherein the base (7) comprises a cylindrical portion (16-17) in the end of which the housing (18) for the joint (10) is embodied and which can be housed in the cap.

5. Device according to claim 4,
wherein notches (21) are made in the cylindrical portion (17), said notches opening into the housing (19) and delimiting elastic clips (22) for supporting the joint (10).

6. Device according to claim 4 or 5,
wherein the cap (9) is cylindrical and wherein the shoulder (18) is provided in the cylindrical portion (16-17) of the base (7).

## Patentansprüche

1. Vorrichtung zur Verbindung eines verschwenkbaren plattenformigen Bauteils mit einem am Ende eines Führungselementes vorgesehenen Kugelkopf, wobei die Vorrichtung ein Befestigungsteil (7), das in ein Loch (8) des plattförmigen Bauteils (2) eingeschoben und dort von außen befestigt werden kann, sowie eine Kappe (9) aufweist, die auf dem Befestigungsteil (7) angebracht werden kann, wobei im Befestigungsteil oder in der Kappe eine Aufnahme (19) für den Kugelkopf (10) des Führungselementes (5) vorgesehen ist, **dadurch gekennzeichnet**, daß das Befestigungsteil (7) elastische Zungen (15) aufweist, die sein Einrasten im Loch (8) erlauben, und daß die Kappe (9) eingeschnittene Zungen (25) aufweist, die jede mit einem Haken (26) endet, der mit einer Schulter (18) des Befestigungsteils (7) in Eingriff kommen kann, und die Kappe mit ihrem oberen Teil in eine in dem Bereich des Befestigungsteils (7) vorgesehene Ausnehmung (12) eingreifen kann, in dem die Zungen (15) ausgebildet sind, und sie so jedes Zurückweichen dieser Zungen und damit das Herausziehen des Halteteils (7) aus der Platte (2) verhindert.

2. Verbindungsvorrichtung nach Anspruch 1, dadurch gekennzeichnet, daß die Aufnahme (19) für das Kugelgelenk (10) im Befestigungsteil (7) vorgesehen ist, und daß die Kappe (9) den Kugelkopf (10) im Befestigungsteil verriegelt.

3. Vorrichtung nach Anspruch 1 oder 2, dadurch gekennzeichnet, daß das Befestigungsteil (7) durch einen zylindrischen Körper (11) gebildet ist, der eine Außennut (13) aufweist und mit Längskerben (14) versehen ist, die die elastischen Zungen (15) begrenzen.

4. Vorrichtung nach einem der Ansprüche 2 bis 3, dadurch gekennzeichnet, daß das Befestigungsteil (7) einen zylindrischen Abschnitt (16-17) aufweist, in dessen Ende die Aufnahme (19) für den Kugelkopf (10) ausgebildet ist und der von der Kappe aufgenommen werden kann.

5. Vorrichtung nach Anspruch 4, dadurch gekennzeichnet, daß in dem zylindrischen Abschnitt (17) Kerben (21) ausgebildet sind, die in die Aufnahme (19) münden und elastische Klemmen (22) zum Halten des Kugelgelenks (10) begrenzen.

6. Vorrichtung nach Anspruch 4 oder 5, dadurch gekennzeichnet, daß die Kappe (9) zylindrisch ausgebildet ist, und daß die Schulter (18) im zylindrischen Abschnitt (16-17) des Befestigungsteils (7) vorgesehen ist.
